(19) Europäisches Patentamt
European Patent Office
Office européen des brevets

(11) EP 4 722 763 A1

(12) DEMANDE DE BREVET EUROPEEN

(43) Date de publication:
08.04.2026 Bulletin 2026/15

(21) Numéro de dépôt: 25203767.6

(22) Date de dépôt: 22.09.2025

(51) Classification Internationale des Brevets (IPC):
G01V 3/12 (2006.01)     G01S 13/88 (2006.01)
G01V 3/38 (2006.01)     G01V 3/15 (2006.01)

(52) Classification Coopérative des Brevets (CPC):
G01V 3/12; G01S 13/885; G01V 3/15; G01V 3/38

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 02.10.2024 FR 2410588

(71) Demandeur: Commissariat à l'Energie Atomique
et aux Energies
Alternatives
75015 Paris (FR)

(72) Inventeurs:
• PAGANI, Pascal
  38054 GRENOBLE (FR)
• DORE, Jean-Baptiste
  38054 GRENOBLE (FR)
• D'ERRICO, Raffaele
  38054 GRENOBLE (FR)

(74) Mandataire: Atout PI Laplace
Immeuble Up On
25 Boulevard Romain Rolland
CS 40072
75685 Paris Cedex 14 (FR)

(54) **METHODE DE DETERMINATION DE PROPRIETES RADIOELECTRIQUES D'UN MILIEU NON-HOMOGENE AU MOYEN D'UN SYSTEME DE DETECTION RADIOFREQUENCE**

(57) Méthode de détermination de propriétés radioélectriques d'un milieu comprenant les étapes de :
- Déterminer (101), une mesure d'une fonction de transfert fréquentielle d'un canal de transmission caractérisant ledit milieu,
- Déterminer (102), un modèle de ladite fonction de transfert fréquentielle fonction d'au moins une variable de position et d'au moins une variable caractérisant une propriété radioélectrique du milieu,
- Déterminer (104) une fonction d'estimation globale du coefficient de corrélation entre les mesures de fonctions de transfert et les modèles,
- Rechercher (105) au moins un maximum local de la fonction d'estimation sur le domaine défini par l'au moins une variable de position et l'au moins une variable caractérisant une propriété radioélectrique du milieu,
- En déduire (106) au moins une valeur de la variable caractérisant la propriété radioélectrique du milieu comme celle qui permet d'obtenir ledit maximum local.

[Fig. 1]

FIG.1

**Description**

L'invention concerne le domaine des dispositifs et méthodes non destructives permettant de caractériser la composition d'un matériau ou d'un milieu non homogène au moyen d'un système radiofréquence. Par exemple, l'invention concerne notamment les radars à pénétration de sol qui permettent de détecter, localiser ou identifier des cibles souterraines. L'invention peut concerner également le domaine de la santé, par exemple la caractérisation de tissus biologiques.

L'invention porte plus précisément sur une méthode de détermination de propriétés radioélectriques d'un milieu non homogène au moyen d'un système radiofréquence.

Pour toutes les applications qui visent à détecter des éléments dans un milieu ou un matériau à partir d'un système de détection radiofréquence, la connaissance des propriétés radioélectriques du milieu de détection est importante.

En effet, la localisation spatiale des cibles recherchées est généralement réalisée par l'analyse du temps de propagation des signaux radioélectriques émis et reçus par le système radiofréquence, qui sont ensuite convertis en distances à l'aide d'une estimation de la vitesse de propagation des ondes radioélectriques dans le milieu. Or, la vitesse de propagation d'une onde électromagnétique dépend des propriétés radioélectriques du milieu, et en particulier (bien que pas exclusivement) de sa permittivité diélectrique. Les propriétés radioélectriques du milieu permettent de décrire la réponse de ce milieu à un champ électrique appliqué.

Par exemple, dans le cas de radars à pénétration de sol, le milieu traversé par les ondes électromagnétiques est en général le sol. Pour le cas d'applications dans le domaine de la santé, le milieu traversé concerne un ensemble de tissus biologiques.

La plupart du temps, des hypothèses a priori sont faites sur les valeurs effectives des caractéristiques radioélectriques du milieu telles que la permittivité diélectrique. Or la précision de ces valeurs peut être importante pour obtenir une précision suffisante pour la détection et la caractérisation de cibles.

L'invention répond donc à un problème général de caractérisation précise des propriétés radioélectriques d'un milieu dans lequel une onde électromagnétique se propage, notamment la permittivité diélectrique ou la perméabilité.

Dans le domaine des radars à pénétration de sol, il existe plusieurs méthodes de détection de la position d'une cible.

Une méthode de l'état de l'art connue est l'ajustement de courbe hyperbole décrit par exemple dans la référence [1]. Lorsqu'une antenne du radar à pénétration de sol est déplacée au-dessus de la surface du sol et que l'onde pénétrante rencontre des cibles enterrées ou des interfaces entre différentes couches du sol, le signal reçu observé dans le domaine temporel présente une forme d'hyperbole, en raison des temps de parcours des ondes réfléchies, qui diffèrent suivant la position relative des antennes du radar et de la cible. Plusieurs configurations de positions d'antennes peuvent être utilisées afin d'observer ce phénomène. Par exemple, les antennes d'émission (Tx) et de réception (Rx) peuvent se déplacer d'un mouvement identique, l'une restant ainsi en position fixe par rapport à l'autre. Alternativement, l'antenne Tx peut réaliser un déplacement symétrique à celui de l'antenne Rx par rapport à un point central fixe, cette configuration étant alors nommée « Common Mid Point ». Enfin, une antenne peut se placer à différentes positions par rapport à la seconde antenne fixe, dans une configuration appelée « Wide Angle Reflection and Refraction ».

Toutes ces techniques d'observation permettent d'obtenir un diagramme en forme d'hyperbole lorsqu'on observe le signal reçu dans le domaine temporel en fonction d'une métrique de position des antennes. Le sommet de l'hyperbole indique alors la position effective de la cible (ou de l'interface) et la forme de l'hyperbole dépend du pas horizontal et de la vitesse du signal dans le matériau : plus la vitesse est élevée, plus l'hyperbole est large et inversement. En analysant la forme de l'hyperbole, on peut remonter à la vitesse de propagation de l'onde dans le milieu et ainsi remonter à la permittivité électrique du milieu. L'ajustement du signal observé sur une hyperbole théorique est réalisé par une analyse de semblance, telle que décrite par exemple dans les références [2, 3].

Cette méthode est très courante pour l'étalonnage de données GPR, mais présente plusieurs inconvénients majeurs. La précision de la méthode reste faible en raison de la difficulté d'ajuster une courbe théorique sur une observation expérimentale entachée d'incertitude. Augmenter la précision nécessite d'acquérir un plus grand nombre d'observations, ce qui implique un déplacement des antennes à chaque observation. Le déplacement des antennes peut être évité si on dispose de plusieurs antennes Tx et Rx réparties spatialement, mais dans ce cas la précision de la technique d'ajustement est faible. La méthode est également peu adaptée à la détection de couches stratifiées pour un milieu non homogène, car les différentes réflexions produisent des hyperboles qui se superposent, rendant l'ajustement plus difficile. Cette situation nécessite de mettre en œuvre des algorithmes complexes, comme l'illustre la référence [4].

Un autre type de méthode connue concerne les méthodes de migration, telles que présentées par exemple dans la référence [5]. Ces méthodes cherchent à réduire l'imprécision de la méthode d'ajustement d'hyperboles due aux incertitudes d'observation du signal reçu. Il s'agit d'une forme de traitement mathématique dont le but principal est d'augmenter la précision des traces hyperboliques des cibles et interfaces. Théoriquement, ce processus permet de réduire les hyperboles acquises par le radar en un point unique de localisation. Cependant, la mise en œuvre de cette technique s'avère délicate lorsqu'on l'applique à des données expérimentales potentiellement bruitées. Il existe une grande variété de méthodes de migration différentes parmi lesquelles la sommation hyperbolique, la migration de Kirchhoff, la focalisation en projection inverse, la migration en décalage de phase, et la migration $\omega$-k [5].

Le principal paramètre requis pour réduire l'hyperbole à un point correspond aux propriétés diélectriques du sol tel qu'enseigné dans la référence [6]. Cela fait du processus de migration un moyen d'augmenter la précision de l'ajustement de la courbe puisque le processus ne fonctionne correctement que si la vitesse de transmission au sol appliquée est précise. Ainsi les méthodes de migration utilisent une estimation moyenne de la permittivité relative d'un matériau pour une profondeur donnée. Un inconvénient de ces méthodes est leur relative imprécision lorsque le matériau est composé de plusieurs couches de permittivités différentes.

La référence [6] propose une méthode appliquée à la détection de cibles enterrées. Elle propose de tester différentes valeurs de permittivités moyennes pour une acquisition donnée. La permittivité sélectionnée est celle qui minimise la surface de la cible détectée. De ce fait, cette méthode n'est pas générique et n'est pas applicable en l'absence de cible, par exemple dans le cas d'un matériau inhomogène stratifié. D'autre part, la métrique de la surface apparente de la cible est peu précise et n'est adaptée qu'aux cibles de forme simple, dont la surface apparente varie de manière monotone avec l'erreur absolue dans la permittivité supposée.

D'autres méthodes connues visent à résoudre la problématique de détermination des propriétés radioélectriques d'un milieu à l'aide d'un système de détection radiofréquence. On peut citer notamment les demandes de brevets et brevets WO2020180191, EP3164672, WO2022091456, FR3041108 et FR3142553.

Toutes ces méthodes présentent des inconvénients, certaines méthodes sont invasives et destructives, d'autres nécessitent la connaissance préalable de la géométrie du milieu, d'autres ne sont pas applicables à un milieu inhomogène. De manière générale, ces méthodes proposent des solutions de traitement de données radar dans le domaine temporel.

Il existe un besoin pour une méthode permettant de caractériser précisément les propriétés radioélectriques d'un milieu au moyen d'un système de détection radiofréquences qui résout les limitations des méthodes de l'art antérieur. La méthode proposée doit notamment être faiblement complexe pour être compatible d'une mise en œuvre dans un système embarqué à ressources limitées.

Il est proposé une nouvelle méthode de caractérisation qui opère dans le domaine fréquentiel et qui présente une complexité diminuée par rapport aux méthodes de l'art antérieur.

L'invention a pour objet une méthode de détermination de propriétés radioélectriques d'un milieu comprenant les étapes de :

- Déterminer, au moyen d'un système de détection radiofréquence comprenant au moins un émetteur et un récepteur, pour chaque couple associant un récepteur et un émetteur, une mesure d'une fonction de transfert fréquentielle d'un canal de transmission caractérisant ledit milieu,

- Déterminer, pour chacun desdits couples, un modèle de ladite fonction de transfert fréquentielle fonction d'au moins une variable de position et d'au moins une variable caractérisant une propriété radioélectrique du milieu,

- Déterminer, pour chacun desdits couples, un coefficient de corrélation entre la mesure de la fonction de transfert fréquentielle et le modèle,

- Déterminer une fonction d'estimation globale du coefficient de corrélation entre les mesures de fonctions de transfert et les modèles, pour tous les couples,

- Rechercher au moins un maximum local de la fonction d'estimation sur le domaine défini par l'au moins une variable de position et l'au moins une variable caractérisant une propriété radioélectrique du milieu,

- En déduire au moins une valeur de la variable caractérisant la propriété radioélectrique du milieu comme celle qui permet d'obtenir ledit maximum local.

Selon un aspect particulier de l'invention, l'étape de rechercher au moins un maximum local de la fonction d'estimation est réalisée au moyen de plusieurs itérations des sous-étapes de :

- Définir un premier niveau d'échantillonnage de l'espace de recherche,

- Rechercher un maximum local pour ce premier niveau d'échantillonnage,

- Réduire l'espace de recherche autour du maximum local et définir un second niveau d'échantillonnage dans l'espace de recherche réduit, le pas du second niveau d'échantillonnage étant plus fin que le pas du premier niveau d'échantillonnage

Selon un aspect particulier de l'invention, l'étape de rechercher au moins un maximum local de la fonction d'estimation comprend les sous-étapes de :

- Rechercher un premier maximum local de la fonction d'estimation,

- Déterminer le coefficient de rétrodiffusion du premier diffuseur associé au premier maximum local à partir dudit maximum local de la fonction d'estimation globale,

- Déterminer la contribution du premier diffuseur dans la mesure de la fonction de transfert fréquentiel comme égale au produit du coefficient de rétrodiffusion du premier diffuseur et de la valeur du modèle de la fonction de transfert prise aux coordonnées du premier maximum local,

- Soustraire de la mesure de la fonction de transfert fréquentielle la contribution du premier diffuseur,

- Itérer les étapes précédentes pour rechercher un autre maximum local de la fonction d'estimation globale déterminée à partir de la mesure corrigée de la fonction de transfert fréquentielle

Selon un aspect particulier de l'invention, l'au moins une variable caractérisant une propriété radioélectrique du milieu est prise parmi : la partie réelle ou la partie imaginaire de la permittivité diélectrique ou de la perméabilité.

Dans une variante de réalisation, la méthode comprend la recherche de plusieurs maxima locaux de la fonction d'estimation, chaque maxima local fournissant une valeur de position d'un diffuseur du milieu et une valeur de la variable caractérisant la propriété radioélectrique à ladite position.

Selon un aspect particulier de l'invention, le coefficient de corrélation est déterminé par une méthode d'égalisation de type ZF,MMSE ou MRC.

Selon un aspect particulier de l'invention, la fonction d'estimation globale du coefficient de corrélation est déterminée comme une moyenne des coefficients de corrélation pour tous les couples et pour une ou plusieurs valeurs de fréquence discrètes.

Selon un aspect particulier de l'invention, chaque coefficient de corrélation est pondéré par un coefficient de pondération prédéfini.

Selon un aspect particulier de l'invention, l'au moins une variable de position est une valeur de profondeur et la méthode comprend une étape de remplacement, dans la fonction d'estimation globale, de la variable de profondeur par une variable de profondeur électrique $z_{el} = z.\sqrt{\varepsilon_r'}$, où $\varepsilon'_r$ est la partie réelle de la permittivité diélectrique.

L'invention a aussi pour objet un système de détermination de propriétés radioélectriques d'un milieu comprenant un dispositif de détection radiofréquence comprenant au moins un émetteur et un récepteur et une unité de traitement, le système étant configuré pour mettre en œuvre la méthode selon l'invention.

Selon un aspect particulier de l'invention, le système de détection radiofréquence est un radar à pénétration de sol.

L'invention a aussi pour objet un programme d'ordinateur comprenant des instructions de code qui conduisent le dispositif selon l'invention à exécuter les étapes de la méthode selon l'invention et un support lisible par ordinateur, sur lequel est enregistré le programme d'ordinateur selon l'invention.

D'autres caractéristiques et avantages de la présente invention apparaîtront mieux à la lecture de la description qui suit en relation aux dessins annexés suivants.

[Fig. 1] représente un organigramme détaillant les étapes de mise en œuvre d'une méthode de détermination de propriétés radioélectriques d'un milieu selon un mode de réalisation de l'invention,

[Fig. 2] schématise un exemple de système de détection radiofréquence, apte à mettre en œuvre l'invention,

[Fig. 3] illustre une représentation graphique d'un modèle de fonction de transfert,

[Fig. 4] représente un organigramme détaillant les étapes d'une première variante de réalisation de la méthode selon l'invention,

[Fig. 5] illustre une application de la variante de la figure 4,

[Fig. 6] représente un organigramme détaillant les étapes d'une seconde variante de réalisation de la méthode selon l'invention,

[Fig. 7a] représente une illustration de l'estimation de la permittivité par focalisation dans le domaine ($\varepsilon'_r$,z),

[Fig. 7b] représente une illustration de l'estimation de la permittivité par focalisation dans le domaine ($\varepsilon'_r$,$z_{el}$),

[Fig. 8] schématise un exemple de système apte à mettre en œuvre l'invention.

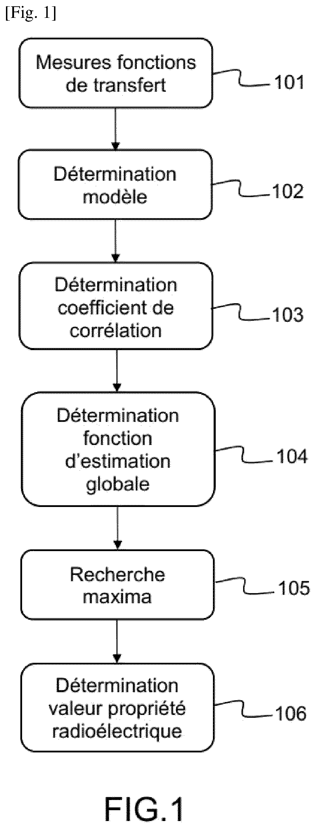

La figure 1 représente un organigramme d'une méthode de détermination de propriétés radioélectriques d'un milieu selon un mode de réalisation de l'invention.

Dans la suite de la description, la méthode est décrite pour un exemple non limitatif destiné à la détermination de la permittivité d'un milieu tel que le sol au moyen d'un système de détection radiofréquences tel qu'un radar à pénétration de sol. Cependant l'invention n'est pas limitée à la détermination de la permittivité mais s'étend à la détermination de toute propriété radioélectrique caractérisant un milieu tel qu'également la perméabilité.

De même l'invention, n'est pas limitée à l'emploi d'un dispositif radar à pénétration de sol mais s'étend à tout dispositif de détection radiofréquence.

La méthode débute à l'étape 101 avec un ensemble de mesures de fonctions de transfert fréquentielles au moyen d'un dispositif de détection radiofréquence.

Le système de détection radiofréquence est composé d'un émetteur capable d'émettre un signal radiofréquence via au moins une antenne d'émission Tx et d'un récepteur capable de recevoir ce signal radiofréquence via au moins une antenne de réception Rx. Plusieurs versions du signal transmis sont observées et dépendent des positions de l'antenne Tx et de l'antenne Rx.

Selon une variante de réalisation, ces différentes versions du signal reçu sont obtenues à partir de plusieurs antennes Tx situées à des positions fixes et plusieurs antennes Rx situées à des positions fixes, selon une configuration du dispositif de détection radiofréquence appelée « Multiple Input Multiple Output (MIMO) ».

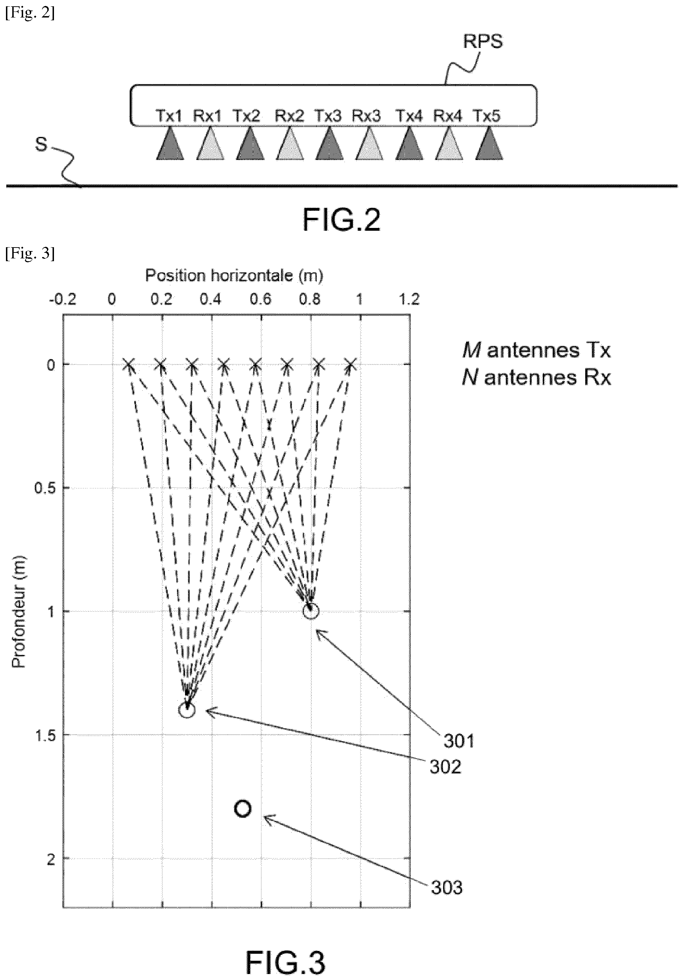

La figure 2 schématise un exemple d'un tel système de détection radiofréquence sous la forme d'un radar à pénétration de sol RPS ayant cinq antennes en émission et quatre antennes en réception.

Alternativement les différentes mesures peuvent également être obtenues en réalisant des transmissions successives, et en déplaçant les antennes Tx ou Rx entre chaque transmission.

Ainsi, on obtient une mesure pour chaque couple associant une antenne d'émission Tx à une antenne de réception Rx pour une position donnée de ces deux antennes.

L'invention s'applique également au cas où une seule antenne sert à la fois en émission et en réception et est connectée à l'émetteur et au récepteur par l'intermédiaire d'un dispositif de séparation tel qu'un coupleur.

La séparation entre les signaux transmis via chaque paire d'antennes Tx et Rx est réalisée dans le domaine temporel à travers des transmissions successives, mais elle peut également être réalisée par toute méthode d'accès multiple classique, comme la séparation en fréquence ou par codes.

On se place à présent dans le cas général d'un système composé de M antennes en émission et N antennes en réception ou plus généralement de M positions d'antennes différentes en émission et N positions d'antennes différentes en réception. M et N sont deux entiers strictement positifs.

Le système de détection radiofréquences comporte en outre un module d'estimation configuré pour déterminer, à partir du signal transmis via l'antenne Tx en position m et reçu via l'antenne Rx en position n, une fonction de transfert complexe $H_{mn}(f)$ pour différentes valeurs de fréquences f.

Plusieurs méthodes d'obtention de la fonction de transfert $H_{mn}(f)$ et de choix d'un signal à transmettre existent dans l'état de l'art et sont des techniques connues du domaine de l'estimation du canal ou du sondage radioélectrique. Les références [9],[10] et [11] donnent des exemples de telles méthodes.

La fonction de transfert $H_{mn}(f)$ dépend de la composition du milieu traversé par le signal, et en particulier de la répartition spatiale des propriétés radioélectriques du milieu, et dans le cas de la présence de cibles, de la position et de la Surface Equivalente Radar (SER) des cibles.

A l'issue de l'étape 101, on a donc une mesure de fonction de transfert $H_{mn}(f)$ pour plusieurs valeurs de fréquences et pour chaque couple (m,n) associant une antenne en émission et une antenne en réception pour lesquelles une mesure a été réalisée.

A l'étape 102, on détermine ensuite un modèle théorique de la fonction de transfert fréquentielle qui prend en compte les propriétés radioélectriques du milieu traversé par le signal.

Par exemple, le modèle choisi est adapté à un diffuseur ponctuel situé à une position $r_p$ dans un milieu homogène de permittivité de partie réelle $\varepsilon'_r$ et de partie imaginaire négligeable. La fonction de transfert entre l'émetteur m et le récepteur n est modélisée par l'équation (1) suivante :

$$W_{mn}(f) = \frac{\sqrt{G_m G_n}.c}{f.\|r_p - r_m\|.\|r_n - r_p\|.(4\pi)^{3/2}.\sqrt{\varepsilon'_r}} \cdot e^{-i2\pi f \frac{\sqrt{\varepsilon'_r}}{c}(\|r_p - r_m\| + \|r_n - r_p\|)} \quad (1)$$

$r_m$ et $r_n$ sont respectivement les positions de l'antenne d'émission et de l'antenne de réception,
$G_m$ et $G_n$ sont les gains respectifs des antennes d'émission et de réception,
C'est la vitesse de la lumière dans le vide.

Le modèle donné par l'équation (1) considère d'une part le déphasage lié à la géométrie de la scène pour une propagation rectiligne et d'autre part une amplitude donnée par l'équation radar issue de la littérature (voir référence [7]).

La figure 3 schématise une représentation graphique du modèle de l'équation (1) pour M=N=8 et pour deux diffuseurs 301,302. La référence 303 représente un point test situé aux coordonnées (x,z).

Sans sortir du cadre de l'invention, d'autres modèles peuvent être développés en remplacement de celui de l'équation (1) dans la mesure où ils prennent en compte au moins une propriété radioélectrique du milieu, par exemple la permittivité $\varepsilon'_r$.

Par exemple, l'équation (1) peut être remplacée par l'équation (1bis) suivante dans laquelle le coefficient $\sqrt{\varepsilon'_r}$ est remplacé par $\varepsilon'_r$.

$$W_{mn}(f) = \frac{\sqrt{G_m G_n}.c}{f.\|r_p - r_m\|.\|r_n - r_p\|.(4\pi)^{3/2}.\varepsilon'_r} \cdot e^{-i2\pi f \frac{\sqrt{\varepsilon'_r}}{c}(\|r_p - r_m\| + \|r_n - r_p\|)} \quad (1\text{bis})$$

En effet, l'équation (1) fournit un modèle de fonction de transfert adapté à un diffuseur ponctuel situé à une position $r_p$ dans un milieu homogène de permittivité de partie réelle $\varepsilon'_r$ et de partie imaginaire négligeable. Sa phase est calculée en considérant le retard accumulé par l'onde pour une propagation rectiligne entre l'antenne Tx et le diffuseur, puis entre le diffuseur et l'antenne Rx. Son amplitude est fournie par l'équation radar (voir référence [7]).

L'observation de résultats expérimentaux tend à montrer que le modèle donné par l'équation (1) n'est pas toujours optimal concernant la modélisation de l'amplitude.

Une explication physique à l'adaptation proposée par l'équation (1bis) est que la surface équivalente radar (SER) est supposée indépendante des propriétés radioélectriques du milieu. Or on estime que la SER d'un objet donné évolue de manière inversement proportionnelle à la permittivité $\varepsilon'_r$ du milieu.

Le modèle de l'équation (1bis) permet d'améliorer la focalisation, tel que cela est explicité par la suite.

A l'étape 103, on détermine un coefficient de corrélation entre la mesure réalisée à l'étape 101 et le modèle déterminé à l'étape 102, pour chaque couple d'antennes.

Par exemple, le coefficient de corrélation est déterminé au moyen de la relation (2) qui représente une égalisation de type Zero Forcing (ZF).

$$\mathcal{L}_{mn}(f, r_p, \varepsilon'_r) = \frac{H_{mn}(f).W_{mn}^*(f, r_p, \varepsilon'_r)}{|W_{mn}(f, r_p, \varepsilon'_r)|^2} \quad (2)$$

* représente l'opérateur de conjugaison complexe

Alternativement, le coefficient de corrélation peut être obtenu via une autre formule d'égalisation, comme par exemple celles de type « Minimum Mean Square Error » (MMSE) pour « Erreur quadratique moyenne minimale » en français ou « Maximum Ratio Combining » (MRC) pour « Combinaison à rapport maximal » en français

Le coefficient de corrélation dépend au moins de la fréquence, d'au moins une coordonnée d'espace et d'au moins une propriété radioélectrique et est représentatif d'une corrélation entre la fonction de transfert mesurée $H_{mn}(f)$ et le modèle $W_{mn}(f, r_p, \varepsilon'_r)$.

Les étapes 101,102,103 sont itérées pour chaque couple associant une antenne en émission d'indice m et une antenne en réception d'indice n.

A l'étape 104, on détermine ensuite une fonction d'estimation globale du coefficient de corrélation pour l'ensemble des observations réalisées par le système de détection radiofréquence.

En considérant que les fonctions de transfert sont observées sur un ensemble de L fréquences discrètes $f_l$, ainsi que pour les différents angles bi-statiques provenant de M positions $r_m$ de l'émetteur et N positions $r_n$ du récepteur, la

fonction d'estimation globale est obtenue en effectuant une somme cohérente des différentes observations tel que représenté par l'équation (3) :

$$\mathcal{L}\left(r_p, \varepsilon'_r\right) = \frac{1}{MNL} \sum_{m=1}^{M} \sum_{n=1}^{N} \sum_{l=1}^{L} \mathcal{L}_{mn}\left(f_l, r_p, \varepsilon'_r\right) \quad (3)$$

A l'étape 105, on recherche ensuite au moins un maximum de la fonction d'estimation globale ou plus précisément de sa valeur absolue lorsque cette fonction est complexe. La recherche est effectuée dans l'espace multidimensionnel constitué des variables d'espace et des variables caractérisant les propriétés radioélectriques formant le domaine de définition de cette fonction.

Cette approche repose sur le principe que les valeurs de propriétés radioélectriques qui correspondent le mieux à la réalité physique du terrain fournissent des valeurs de coefficient de corrélation qui sont cohérentes entre différentes fréquences et différentes configurations d'observations, maximisant le module de la somme cohérente de l'équation (3).

Cette maximisation du module de la somme cohérente des coefficients de corrélation pour des valeurs de variables qui correspondent à une réalité physique observée est encore appelé « principe de focalisation ».

A l'étape 106 de la méthode, on déduit au moins une valeur de propriété radioélectrique associée à une position spatiale.

Par exemple, pour l'exemple des équations (2) et (3), on obtient une valeur de position $r_p^{max}$ et une valeur de permittivité diélectrique $\varepsilon'^{max}_r$ associée à cette position qui sont définis par l'équation (4) :

$$\left(r_p^{max}, \varepsilon'^{max}_r\right) = \underset{r_p, \varepsilon'_r}{\mathrm{argmax}} \left|\mathcal{L}\left(r_p, \varepsilon'_r\right)\right| \quad (4)$$

Argmax représente la fonction mathématique argument du maximum, qui fournit les valeurs des variables pour lesquelles une fonction atteint son maximum.

Etant donné le modèle a priori donné par l'équation (1), le vecteur $r_p^{max}$ renseigne sur la position du diffuseur ponctuel fournissant la Surface Equivalente Radar la plus importante dans l'espace observé et $\varepsilon'^{max}_r$ renseigne sur la valeur la plus représentative de la partie réelle de la permittivité diélectrique moyenne dans la partie du milieu parcourue par l'onde électromagnétique entre les antennes d'émission et les antennes de réception via la position $r_p^{max}$.

Avantageusement, l'étape 106 n'est pas limitée à la recherche d'un seul maximum mais peut être étendue à la recherche de plusieurs maxima locaux de la fonction $|\mathcal{L}\left(r_p, \varepsilon'_r\right)|$.

Par exemple, on recherche les R sommets de la fonction continue $|\mathcal{L}\left(r_p, \varepsilon'_r\right)|$ présentant les valeurs les plus élevées. Les coordonnées de chaque maximum local fournissent à la fois la position spatiale d'un diffuseur important et la valeur de la propriété radioélectrique la plus représentative du milieu traversé par l'onde électromagnétique entre les antennes d'émission et les antennes de réception via ce diffuseur.

Dans une variante de réalisation de l'invention, la recherche du maximum (étape 105) peut être réalisée dans un sous-domaine du domaine de définition de la fonction $|\mathcal{L}\left(r_p, \varepsilon'_r\right)|$. Ainsi, par exemple, on peut limiter la recherche du maximum à un sous ensemble de positions spatiales données, par exemple les points situés au-delà d'une certaine profondeur dans le cas d'un radar à pénétration de sol. De même, la recherche des valeurs de propriétés radioélectriques peut être limitée à un intervalle prédéfini.

Dans une autre variante de réalisation de l'invention, la fonction d'estimation globale donnée par l'équation (3) est modifiée en affectant un poids variable à chaque coefficient de corrélation. L'équation (3) devient alors :

$$\mathcal{L}\left(r_p, \varepsilon'_r\right) = \frac{1}{MNL} \sum_{m=1}^{M} \sum_{n=1}^{N} \sum_{l=1}^{L} \gamma(m, n, l) . \mathcal{L}_{mn}\left(f_l, r_p, \varepsilon'_r\right) \quad (5)$$

$y(m, n, l)$ est un coefficient de pondération qui peut prendre des valeurs différentes pour chaque observation associée à une fréquence et à un couple d'antennes.

Par exemple, la fonction de pondération suivante permet de ne pas tenir compte des observations réalisées par l'antenne d'émission d'indice m=1, dans le cas où ces observations sont jugées erronées :

$$\gamma(m, n, l) = 0, si \; m = 1$$

$$\gamma(m, n, l) = 1, si \; m \neq 1$$

Pour implémenter la méthode décrite à la figure 1, une difficulté réside dans l'exploration du domaine de définition de la fonction $|\mathcal{L}(r_p, \varepsilon'_r)|$. En effet, suivant le nombre de variables spatiales et de paramètres radioélectriques qui forment les dimensions de ce domaine, la recherche de maximum peut devenir très complexe, et nécessiter un temps d'exécution important qui peut être incompatible d'une implémentation en temps réel dans un dispositif embarqué à ressources limitées.

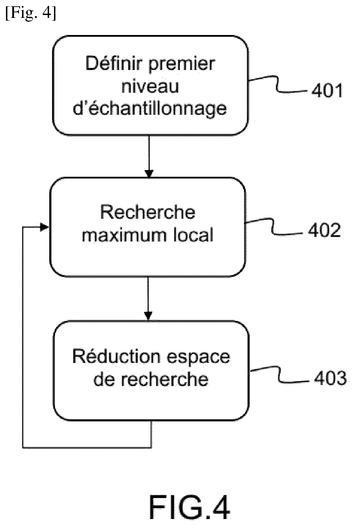

Pour pallier cet inconvénient, il est proposé une première variante de réalisation de l'invention, décrite à la figure 4, qui vise à optimiser l'espace d'exploration de la fonction d'estimation globale. Autrement dit, il s'agit d'optimiser l'étape 105 de recherche de maxima locaux.

L'organigramme de la figure 4 détaille les étapes de mise en œuvre de cette variante de réalisation de l'étape 105.

A l'étape 401, on détermine un premier niveau d'échantillonnage dit grossier, de l'espace d'exploration ayant un pas d'échantillonnage prédéfini de sorte à avoir un nombre limité d'échantillons dans l'espace d'exploration, ce nombre étant compatible de la place mémoire et de la puissance de calcul disponible.

A l'étape 402, on recherche un premier maximum pour ce premier niveau d'échantillonnage.

A l'étape 403, l'espace d'exploration est réduit autour du maximum trouvé à l'étape 402 et le niveau d'échantillonnage est augmenté dans cet espace réduit avec un pas d'échantillonnage plus fin qu'à l'étape 401. Par exemple, le domaine d'exploration est réduit d'un certain pourcentage tout en conservant le même nombre d'échantillons qu'à l'étape 401 du fait de la réduction du pas d'échantillonnage.

Les étapes 402 et 403 sont itérées plusieurs fois afin d'affiner les coordonnées exactes du maximum.

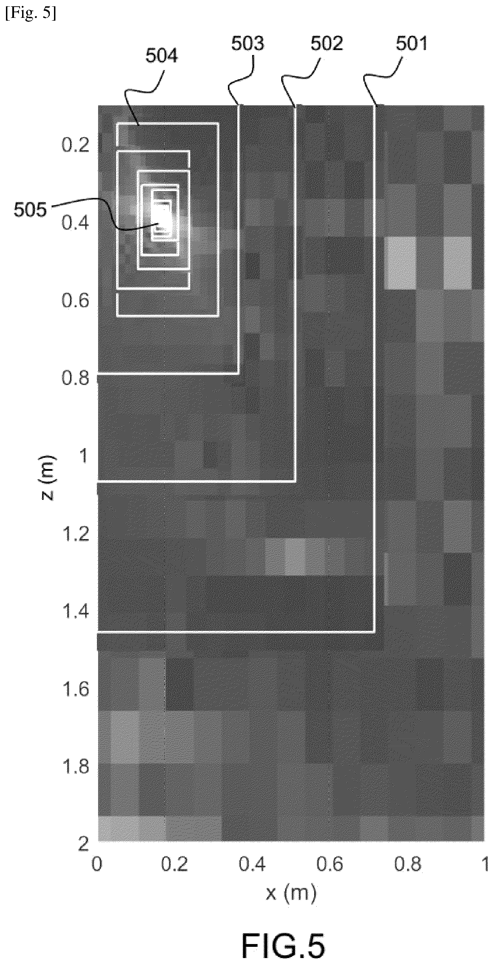

La figure 5 illustre un exemple de réalisation de cette variante pour le cas d'un radar à pénétration de sol. L'espace d'exploration du domaine spatial est limité aux valeurs d'abscisse x comprises dans un intervalle donné et aux valeurs de profondeur z comprises dans un intervalle donné. La fonction d'estimation globale est une fonction à trois variables, $x_p, z_p$ et $\varepsilon'_r$.

La figure 5 montre l'espace de recherche spatial avec les zones de recherche 501-504 successives qui sont réduites à chaque itération pour être centrées sur le maximum 505.

Un inconvénient de cette méthode est qu'elle n'est pas adaptée à la recherche de plusieurs maxima locaux puisque la réduction itérative des zones de recherche peut exclure d'autres maxima locaux.

Il est proposé une autre variante de réalisation de l'invention qui permet d'adapter la méthode de la figure 4 à la recherche de plusieurs maxima locaux.

Cette autre variante consiste à réaliser plusieurs itérations de la méthode de la figure 4, chaque itération étant dédiée à la recherche d'un maximum local parmi plusieurs maxima. A chaque itération, le diffuseur associé au maximum détecté à l'itération précédente est soustrait à la fonction de transfert observée de manière progressive, de façon à permettre une focalisation itérative sur des maxima secondaires de la fonction d'estimation globale.

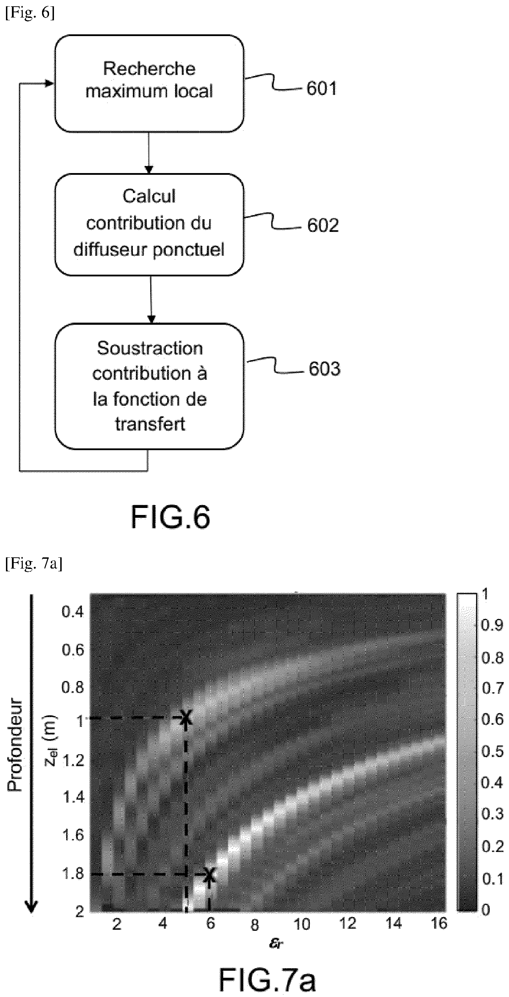

La figure 6 représente un organigramme détaillant les étapes de mise en œuvre de cette variante de réalisation.

A l'étape 601, on recherche un premier maximum local qui correspond au diffuseur le plus important. Par exemple, l'étape 601 est mise en œuvre au moyen de la méthode itérative décrite à la figure 4 en effectuant une réduction progressive de l'espace de recherche.

A l'étape 602, on calcule la contribution du 1$^{er}$ diffuseur détecté à l'étape 601 dans la fonction de transfert spectrale, pour chaque paire d'antennes.

En se plaçant toujours dans l'exemple de la figure 5 pour lequel on se limite à un espace de recherche spatial en x et en z, on obtient les paramètres $\{x_1, z_1$ et $\varepsilon'_{r1}\}$ du premier diffuseur ponctuel à l'étape 601.

On calcule ensuite un estimateur du coefficient de rétrodiffusion complexe du premier diffuseur ponctuel qui est par exemple donné par la relation (6) :

$$\widehat{S_{d1}(f_l)} = \frac{1}{MN} \sum_{m=1}^{M} \sum_{n=1}^{N} \mathcal{L}_{mn}(f_l, x_1, z_1, \varepsilon'_{r1}) \qquad (6)$$

Alternativement, en considérant que le coefficient de rétrodiffusion ne dépend pas de la fréquence, la relation (6) est remplacée par la relation (6') :

$$\widehat{S_{d1}} = \frac{1}{MN} \sum_{m=1}^{M} \sum_{n=1}^{N} \sum_{l=1}^{L} \mathcal{L}_{mn}(f_l, x_1, z_1, \varepsilon'_{r1}) \qquad (6')$$

Ensuite, on calcule la contribution du premier diffuseur dans la fonction de transfert spectrale au moyen de la relation (7) en multipliant le coefficient de rétrodiffusion et le modèle pris aux valeurs du premier extrema :

$$H_{mn}^1(f_l) = \widehat{S_{d1}(f_l)}.W_{mn}(f_l, x_1, z_1, \varepsilon'_{r1}) \quad (7)$$

Ensuite, à l'étape 603 on soustrait la contribution calculée à l'étape 602 à la fonction de transfert mesurée initialement à l'étape 101 afin d'obtenir une fonction de transfert résiduelle dans laquelle la contribution du premier diffuseur a été supprimée :

$$H_{mn}^{res1}(f_l) = H_{mn}(f_l) - H_{mn}^1(f_l) \quad (8)$$

Les étapes 601,602,603 sont ensuite itérées autant de fois que de maxima locaux à détecter en soustrayant à chaque itération la contribution du diffuseur détecté à la fonction de transfert.

Un critère d'arrêt de la méthode est par exemple un nombre d'itérations prédéfini ou un critère de comparaison du rapport de puissance entre la fonction de transfert résiduelle et la fonction de transfert mesurée initialement à un seuil prédéfini.

Dans une variante de réalisation notamment applicable aux radars à pénétration de sol, la fonction d'estimation globale $\mathcal{L}(x_p, z_p, \varepsilon'_r)$ est modifiée de sorte à introduire un changement de variable. En effet, pour faciliter la recherche de maxima dans un espace multidimensionnel, il est pertinent de modifier la variable de profondeur z en la remplaçant par une variable de profondeur électrique $z_{el} = z.\sqrt{\varepsilon_r'}$.

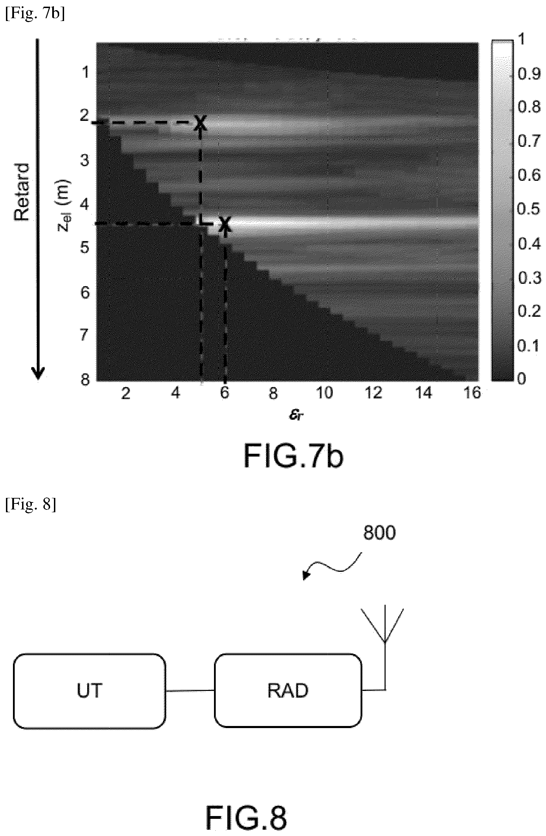

Les figures 7a et 7b illustrent, sur un exemple, l'intérêt d'un tel changement de variable.

La figure 7a représente la valeur de la fonction $\mathcal{L}(x_p, z_p, \varepsilon'_r)$ représentée par sa valeur maximale selon la dimension x dans le plan $(\varepsilon'_r, z)$.

La figure 7b représente la même valeur dans le plan $(\varepsilon'_r, z_{el})$.

On peut remarquer que la tâche de focalisation est nettement mieux définie dans le plan $(\varepsilon'_r, z_{el})$. Ceci est dû au fait que la métrique physique qui est analysée est fondamentalement de nature temporelle car homogène à un retard et non de nature spatiale. On obtient ainsi une fonction mieux quantifiée lorsqu'on l'observe sur une grille régulière du plan $(\varepsilon'_r, z_{el})$, par rapport au plan $(\varepsilon'_r, z)$.

Sur les figures 7a et 7b deux maxima sont observés pour les valeurs $(\varepsilon'_r, z_{el}) = (5, 2.10\text{m})$ et $(6, 4.50 \text{ m})$.

Dans une autre variante de réalisation de l'invention, on utilise l'algorithme de Dix décrit dans la référence [8] pour estimer les permittivités moyennes de plusieurs couches du sol.

En reprenant l'exemple des figures 7a et 7b, la recherche de maxima a permis de détecter deux objets : l'un à une profondeur de 0.95 m avec une permittivité de 5 en valeur moyenne et l'autre à une profondeur de 1.80 m avec une permittivité de 6 en valeur moyenne. Or les valeurs moyennes des permittivités correspondent à la portion du sol comprise entre le réseau d'antenne et le diffuseur associé au maximum détecté.

Ainsi, la double détection identifiée sur les figures 7a et 7b permet de constater l'existence d'au moins deux couches de matériaux de permittivités différentes. Pour obtenir la permittivité par couche à partir de la permittivité moyenne, on applique l'algorithme de Dix qui est basé sur les vélocités en moyennes quadratiques. Cette méthode permet de décomposer les permittivités moyennes en permittivités par couches.

Ainsi, la permittivité $\varepsilon_{r[c_n]}$ de la couche $C_n$ est déterminée à partir des permittivités moyennes $\varepsilon_{r[c_0 \to n]}$ entre le réseau d'antennes et la couche $C_n$ et entre le réseau d'antennes et la couche $C_{n-1}$ $\varepsilon_{r[c_0 \to n-1]}$ au moyen des relation suivantes :

$$\varepsilon_{r[c_n]} = \left(\frac{z_n\sqrt{\varepsilon_{r[c_0 \to n]}} - z_{n-1}\sqrt{\varepsilon_{r[c_0 \to n-1]}}}{z_n - z_{n-1}}\right)^2$$

$$\varepsilon_{r[c_0 \to 0]} = 1$$

$$z_0 = 0$$

La figure 8 représente schématiquement un système 800 de détermination de propriétés radioélectriques d'un milieu selon un mode de réalisation de l'invention.

Le système 800 comporte principalement un dispositif de détection radiofréquences RAD du type de celui décrit en figure 2 et une unité de traitement UT configurée pour mettre en œuvre la méthode selon l'invention à partir de mesures réalisées par le dispositif RAD.

L'unité de traitement UT peut être réalisée sous forme logicielle et/ou matérielle notamment en utilisant un ou plusieurs processeur(s) et une ou plusieurs mémoire(s). Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le système 800 peut comporter une interface utilisateur pour afficher des résultats produits par la méthode.

Références

[1] S. Serkan and V. Borecky, "Estimation methods for obtaining GPR signal velocity," in Proceedings of the Third International Conference on ACSEE, Zurich, Switzerland, 2015, pp. 10-11.

[2] E. Forte and M. Pipan, "Review of multi-offset GPR applications : Data acquisition, processing and analysis," Signal processing, vol. 132, pp. 210-220, 2017.

[3] I. Dal Bo, A. Klotzsche et al., "Geophysical imaging of regolith in landscapes along a climate and vegetation gradient in the Chilean coastal cordillera," Catena, vol. 180, pp. 146-159, 2019.

[4] Q. Dou, L. Wei, D. R. Magee, and A. G. Cohn, "Real-time hyperbola recognition and fitting in GPR data," IEEE Transactions on Geoscience and Remote Sensing, vol. 55, no. 1, pp. 51-62, 2017.

[5] C. Ozdemir, S,. Demirci et al., "A review on migration methods in B-scan ground penetrating radar imaging," Mathematical Problems in Engineering, vol. 2014, 2014.

[6] Z. Dong, X. Feng et al., "3D migration depth focus velocity analysis of hand-held ground penetrating radar," Geosciences, vol. 12, no. 4, p. 178, 2022.

[7] E. F. Knott, J. F. Schaeffer, and M. T. Tulley, Radar Cross Section. SciTech Publishing, 2004.

[8] C. H. Dix, "Seismic velocities from surface measurements," Geophysics, vol. 20, no. 1, pp. 68-86,1955.

[9] Demery, D. A., J. D. Parsons, and A. M. D. Turkmani. "Sounding techniques for wideband mobile radio channels: a review." IEEE Proceedings (Communications, Speech and Vision) 138.5 (1991): 437-446.

[10] Laurenson, Dave, and Peter Grant. "A review of radio channel sounding techniques." 2006 14th European Signal Processing Conference. IEEE, 2006.

[11] Ullah, M. Habib, and A. Unggul Priantoro. "A review on multiplexing schemes for MIMO channel sounding." International Journal of Computer Science and Network Security 9.6 (2009): 294-300.

Revendications

1. Méthode, mise en œuvre par ordinateur, de détermination de propriétés radioélectriques d'un milieu comprenant les étapes de :

   - Déterminer (101), au moyen d'un système de détection radiofréquence comprenant au moins un émetteur et un récepteur, pour chaque couple associant un récepteur et un émetteur, une mesure d'une fonction de transfert fréquentielle d'un canal de transmission caractérisant ledit milieu,

- Déterminer (102), pour chacun desdits couples, un modèle de ladite fonction de transfert fréquentielle fonction d'au moins une variable de position et d'au moins une variable caractérisant une propriété radioélectrique du milieu,
- Déterminer (103), pour chacun desdits couples, un coefficient de corrélation entre la mesure de la fonction de transfert fréquentielle et le modèle,
- Déterminer (104) une fonction d'estimation globale du coefficient de corrélation entre les mesures de fonctions de transfert et les modèles, pour tous les couples,
- Rechercher (105) au moins un maximum local de la fonction d'estimation sur le domaine défini par l'au moins une variable de position et l'au moins une variable caractérisant une propriété radioélectrique du milieu,
- En déduire (106) au moins une valeur de la variable caractérisant la propriété radioélectrique du milieu comme celle qui permet d'obtenir ledit maximum local.

2. Méthode de détermination de propriétés radioélectriques d'un milieu selon la revendication 1 dans laquelle l'étape (105) de rechercher au moins un maximum local de la fonction d'estimation est réalisée au moyen de plusieurs itérations des sous-étapes de :

- Définir (401) un premier niveau d'échantillonnage de l'espace de recherche,
- Rechercher (402) un maximum local pour ce premier niveau d'échantillonnage,
- Réduire (403) l'espace de recherche autour du maximum local et définir un second niveau d'échantillonnage dans l'espace de recherche réduit, le pas du second niveau d'échantillonnage étant plus fin que le pas du premier niveau d'échantillonnage

3. Méthode de détermination de propriétés radioélectriques d'un milieu selon l'une quelconque des revendications précédentes dans laquelle l'étape de rechercher au moins un maximum local de la fonction d'estimation comprend les sous-étapes de :

- Rechercher (601) un premier maximum local de la fonction d'estimation,
- Déterminer (602) le coefficient de rétrodiffusion du premier diffuseur associé au premier maximum local à partir dudit maximum local de la fonction d'estimation globale,
- Déterminer (602) la contribution du premier diffuseur dans la mesure de la fonction de transfert fréquentielle comme égale au produit du coefficient de rétrodiffusion du premier diffuseur et de la valeur du modèle de la fonction de transfert prise aux coordonnées du premier maximum local,
- Soustraire (603) de la mesure de la fonction de transfert fréquentielle la contribution du premier diffuseur,
- Itérer les étapes précédentes pour rechercher un autre maximum local de la fonction d'estimation globale déterminée à partir de la mesure corrigée de la fonction de transfert fréquentielle

4. Méthode de détermination de propriétés radioélectriques d'un milieu selon l'une quelconque des revendications précédentes dans laquelle l'au moins une variable caractérisant une propriété radioélectrique du milieu est prise parmi : la partie réelle ou la partie imaginaire de la permittivité diélectrique ou de la perméabilité.

5. Méthode de détermination de propriétés radioélectriques d'un milieu selon l'une quelconque des revendications précédentes comprenant la recherche de plusieurs maxima locaux de la fonction d'estimation, chaque maxima local fournissant une valeur de position d'un diffuseur du milieu et une valeur de la variable caractérisant la propriété radioélectrique à ladite position.

6. Méthode de détermination de propriétés radioélectriques d'un milieu selon l'une quelconque des revendications précédentes dans laquelle le coefficient de corrélation est déterminé par une méthode d'égalisation de type ZF,MMSE ou MRC.

7. Méthode de détermination de propriétés radioélectriques d'un milieu selon l'une quelconque des revendications précédentes dans laquelle la fonction d'estimation globale du coefficient de corrélation est déterminée comme une moyenne des coefficients de corrélation pour tous les couples et pour une ou plusieurs valeurs de fréquence discrètes.

8. Méthode de détermination de propriétés radioélectriques d'un milieu selon la revendication 7 dans laquelle chaque coefficient de corrélation est pondéré par un coefficient de pondération prédéfini.

9. Méthode de détermination de propriétés radioélectriques d'un milieu selon l'une quelconque des revendications précédentes dans laquelle l'au moins une variable de position est une valeur de profondeur et la méthode comprend une étape de remplacement, dans la fonction d'estimation globale, de la variable de profondeur par une variable de profondeur électrique $z_{el} = z.\sqrt{\varepsilon_r'}$ , où ε'$_r$ est la partie réelle de la permittivité diélectrique.

10. Système de détermination de propriétés radioélectriques d'un milieu comprenant un dispositif de détection radiofréquence comprenant au moins un émetteur et un récepteur et une unité de traitement, le système étant configuré pour mettre en œuvre la méthode selon l'une quelconque des revendications précédentes.

11. Système selon la revendication 10 dans lequel le dispositif de détection radiofréquence est un radar à pénétration de sol.

12. Programme d'ordinateur comprenant des instructions de code qui conduisent le système selon l'une quelconque des revendications 10 ou 11 à exécuter les étapes de la méthode selon l'une quelconque des revendications 1 à 9.

13. Support lisible par ordinateur, sur lequel est enregistré le programme d'ordinateur selon la revendication 12.

[Fig. 1]

FIG.1

[Fig. 2]

FIG.2

[Fig. 3]

FIG.3

[Fig. 4]

FIG.4

[Fig. 5]

FIG.5

[Fig. 6]

FIG.6

[Fig. 7a]

FIG.7a

[Fig. 7b]

FIG.7b

[Fig. 8]

FIG.8

**EP 4 722 763 A1**

Europäisches
Patentamt

European
Patent Office

Office européen
des brevets

# RAPPORT DE RECHERCHE EUROPEENNE

Numéro de la demande

EP 25 20 3767

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 2024/176012 A1 (MAKHOUL GLORIA [FR] ET AL) 30 mai 2024 (2024-05-30) <br> * figures 1,2 * <br> * alinéas [0002] - [0046] * <br> * alinéas [0065], [0073] * <br> * alinéas [0108] - [0109], [0127] - [0129] * <br> ----- | 1,2,4-13 | INV. <br> G01V3/12 <br> G01S13/88 <br> G01V3/38 <br> G01V3/15 |
| A | US 2023/266461 A1 (D'ERRICO RAFFAELE [FR] ET AL) 24 août 2023 (2023-08-24) <br> * le document en entier * <br> ----- | 1-13 | |
| A,D | WO 2022/091456 A1 (MITSUBISHI ELECTRIC CORP [JP] ET AL.) 5 mai 2022 (2022-05-05) <br> * le document en entier * <br> ----- | 1-13 | |
| A | LAMBOT SÉBASTIEN ET AL: "Analysis of air-launched ground-penetrating radar techniques to measure the soil surface water content", <br> WATER RESOURCES RESEARCH. <br> , <br> vol. 42, no. 11 <br> 1 novembre 2006 (2006-11-01), XP093261856, US <br> ISSN: 0043-1397, DOI: 10.1029/2006WR005097 <br> Extrait de l'Internet: <br> URL:https://api.wiley.com/onlinelibrary/tdm/v1/articles/10.1029%2F2006WR005097 <br> * le document en entier * <br> ----- | 1-13 | DOMAINES TECHNIQUES RECHERCHES (IPC) <br><br> G01V <br> G01S |

Le présent rapport a été établi pour toutes les revendications

| Lieu de la recherche | Date d'achèvement de la recherche | Examinateur |
|---|---|---|
| La Haye | 19 janvier 2026 | Parmentier, Hélène |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 20 3767

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-01-2026

| Document brevet cité au rapport de recherche | Date de publication | Membre(s) de la famille de brevet(s) | | Date de publication |
|---|---|---|---|---|
| US 2024176012 A1 | 30-05-2024 | EP | 4375663 A1 | 29-05-2024 |
| | | FR | 3142553 A1 | 31-05-2024 |
| | | US | 2024176012 A1 | 30-05-2024 |
| US 2023266461 A1 | 24-08-2023 | EP | 4172655 A1 | 03-05-2023 |
| | | FR | 3111994 A1 | 31-12-2021 |
| | | US | 2023266461 A1 | 24-08-2023 |
| | | WO | 2022002700 A1 | 06-01-2022 |
| WO 2022091456 A1 | 05-05-2022 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020180191 A
- EP 3164672 A
- WO 2022091456 A
- FR 3041108
- FR 3142553

**Littérature non-brevet citée dans la description**

- **S. SERKAN** ; **V. BORECKY**. stimation methods for obtaining GPR signal velocity. *Proceedings of the Third International Conference on ACSEE, Zurich, Switzerland*, 2015, 10-11
- **E. FORTE** ; **M. PIPAN**. Review of multi-offset GPR applications : Data acquisition, processing and analysis. *Signal processing*, 2017, vol. 132, 210-220
- **I. DAL BO** ; **A. KLOTZSCHE et al.** Geophysical imaging of regolith in landscapes along a climate and vegetation gradient in the Chilean coastal cordillera. *Catena*, 2019, vol. 180, 146-159
- **Q. DOU** ; **L. WEI** ; **D. R. MAGEE** ; **A. G. COHN**. Real-time hyperbola recognition and fitting in GPR data. *IEEE Transactions on Geoscience and Remote Sensing*, 2017, vol. 55 (1), 51-62
- **C. OZDEMIR** ; **S,. DEMIRCI et al.** A review on migration methods in B-scan ground penetrating radar imaging. *Mathematical Problems in Engineering*, 2014, vol. 2014
- **Z. DONG** ; **X. FENG et al.** 3D migration depth focus velocity analysis of hand-held ground penetrating radar. *Geosciences*, 2022, vol. 12 (4), 178
- **E. F. KNOTT** ; **J. F. SCHAEFFER** ; **M. T. TULLEY**. Radar Cross Section. SciTech Publishing, 2004
- **C. H. DIX**. Seismic velocities from surface measurements. *Geophysics*, 1955, vol. 20 (1), 68-86
- **DEMERY, D. A.** ; **J. D. PARSONS** ; **A. M. D. TURKMANI.** Sounding techniques for wideband mobile radio channels: a review. *IEEE Proceedings (Communications, Speech and Vision)*, 1991, 437-446
- A review of radio channel sounding techniques.. **LAURENSON, DAVE** ; **PETER GRANT.** 2006 14th European Signal Processing Conference. IEEE, 2006
- **ULLAH, M. HABIB** ; **A. UNGGUL PRIANTORO**. A review on multiplexing schemes for MIMO channel sounding. *International Journal of Computer Science and Network Security*, 2009, 294-300